Europäisches Patentamt

**European Patent Office**

Office européen des brevets

(19)

(11) Veröffentlichungsnummer : **0 232 803**
**B1**

(12) **EUROPÄISCHE PATENTSCHRIFT**

(45) Veröffentlichungstag der Patentschrift :
07.06.89

(51) Int. Cl.⁴ : **E 05 F 15/16**, F 16 H 19/00

(21) Anmeldenummer : 87101212.6

(22) Anmeldetag : 29.01.87

(54) Getriebe zur Überführung einer rotatorischen in eine translatorische Bewegung.

(30) Priorität : 01.02.86 DE 3603121
01.02.86 DE 3603122

(43) Veröffentlichungstag der Anmeldung :
19.08.87 Patentblatt 87/34

(45) Bekanntmachung des Hinweises auf die Patenterteilung : 07.06.89 Patentblatt 89/23

(84) Benannte Vertragsstaaten :
AT BE CH DE ES FR GB GR IT LI LU NL SE

(56) Entgegenhaltungen :
EP--A-- 0 063 219
EP--A-- 0 165 497
DE--B-- 2 938 953
US--A-- 2 574 657
US--A-- 4 520 684

(73) Patentinhaber : HÖRMANN KG ANTRIEBS- und
STEUERUNGSTECHNIK
Postfach 1246
D-4834 Harsewinkel 2 (DE)

(72) Erfinder : Hörmann Michael Dipl. Ing.
Upheider Weg 94
D-4803 Steinhagen (DE)

(74) Vertreter : Flügel, Otto, Dipl.-Ing. et al
Lesser, Flügel & Säger Patentanwälte Richard-Strauss-Strasse 56 Postfach 81 05 40
D-8000 München 80 (DE)

**Beschreibung**

Die Erfindung betrifft ein Getriebe mit den Merkmalen des Oberbegriffes des Anspruches 1.

Ein solches Getriebe ist aus der DE-PS 34 19 477 bekannt, auf die dortigen Ausführungen wird hier ausdrücklich Bezug genommen, ohne daß eine Beschränkung auf die dortigen Ausführungsbeispiele vorgenommen werden soll.

Das besondere Charakteristikum dieses Getriebes besteht darin, daß die Stränge in ihrem zusammengeführten Zustand innerhalb der Führung erhebliche Zug- und Druckkräfte übertragen können, ohne eine hohe Reibung an den Führungswandungen zu erzeugen. Innerhalb der Führung sind die beiden Stränge zu einem Anschlußglied zusammengefaßt, an welches ein zu bewegendes Bauteil, beispielsweise ein Torblatt, insbesondere ein über Kopf bewegbares Torblatt eines Garagentores oder dergleichen, angeschlossen ist.

Bei diesen Getrieben mit endlos geführten Bewegungsübertragungsgliedern — beispielsweise Ketten — oder auch offen ausgebildet, wie beim Ausführungsbeispiel nach der eingangs genannten Patentschrift, wird grundsätzlich von der Vorstellung ausgegangen, daß die Getriebeverbindung zwischen dem Rotationsantrieb und dem Bewegungsübertragungsglied in keiner Bewegungsstellung außer Eingriff gerät. Um die hin- und hergehende Bewegung entlang ihrer Soll-Strecke zu markieren, werden entsprechend positionierte Endschalter vorgesehen. Für den Unfallschutz sind die Torkanten mit Überwachungsleisten zu versehen, die bei Angriff an einem in der Bewegungsbahn des Torblattes befindlichen Gegenstand eine Ab- bzw. Umschaltung der Antriebsbewegung auslösen.

Man ist bestrebt, ein solches Getriebeaggregat in möglichst weit getrieben vormontiertem Zustand an den Einsatzort zu liefern, so daß die dortigen Installationsarbeiten zeitsparend und möglichst frei von komplizierteren Vorgängen sind, insbesondere soll ein Eingriff in das Getriebe selbst vermieden werden. Befindet sich in diesem vormontierten Zustand der Rotationsantrieb im Gewindeeingriff mit dem Bewegungsübertragungsglied, dann kann insbesondere bei unsachgemäßem Einschalten des Motors — beispielsweiser in der falschen Drehrichtung etc. — nicht nur eine Verletzungsgefahr, sondern auch eine Zerstörungsgefahr der belasteten Getriebeteile auftreten.

Im übrigen hat man als Notmaßnahme gegen wirkungsloses Überfahren einer der Endstellungen mehrere Möglichkeiten in Betracht gezogen, den Antrieb vor einer Selbstzerstörung zu bewahren. So hat man in Bewegungsrichtung versetzt einen weiteren Endschalter vorgesehen, was entsprechenden Aufwand und insoweit eine verlängerte Ausführung der Verschiebestrecke erfordert. Weiterhin ist es möglich, einen Überlastungsschalter vorzusehen, der eine mechanische Bewegung gegen die Kraft einer Feder ausführen kann, wobei der durch die Feder gegebene Widerstand gegen diese Verschiebung größer sein muß als die Getriebebelastung bei normalem Betrieb. Auch kann man eine Überlastung eines elektrischen Antriebsmotors durch Überwachung der elektrischen Werte vornehmen. In den letzteren beiden Fällen kann man aber nicht verhindern, daß die mechanische Belastung des Getriebes in einem solchen Fall erheblich höher wird als für den Normalbetrieb. Das bedeutet entweder eine entsprechende Überdimensionierung der belasteten Getriebeteile oder deren Zerstörungsgefahr.

Um das Getriebe in möglichst weitgehend vormontiertem Zustand ausliefern zu können, und zwar auch dann, wenn aus Gründen des Transport-Platzbedarfes das Getriebe zumindest in einen Antriebsteil und einen Führungsteil getrennt ist, spielt die Führung und Speicherung der getrennten Stränge in räumlicher Hinsicht eine besondere Rolle. Hierzu ist in der vorerwähnten Patentschrift neben einer führungsparallelen Speicherung bereits eine solche angedeutet, bei der die getrennten Stränge je in einen Trommelspeicher seitlich des Zusammenführungsbereiches aufgenommen sind.

Neben der angestrebten möglichst geringen Reibung des Bewegungsübertragungsgliedes innerhalb der Führung ist weiterhin von Bedeutung, wie leichtgängig bzw. reibungsarm die voneinander getrennten Stränge jeweils für sich in ihre Speicherstellung bzw. aus dieser heraus bewegt werden können, um insgesamt den Energiebedarf bzw. die Leistung des Antriebsmotors klein halten zu können.

Der Erfindung liegt die Aufgabe zugrunde, ein Getriebe der eingangs genannten Art zur Verfügung zu stellen, das in möglichst weitgehend vormontiertem Zustand an den Einsatzort geliefert und dort eingebaut werden kann, ohne daß bei Ersteinschalten des Antriebsmotors oder während des Betriebes bei Überfahren wenigstens einer der Verschiebe-Endstellungen durch Überlastung des Getriebes Zerstörungsgefahren auftreten können.

Ausgehend von einem Getriebe mit den Merkmalen des Oberbegriffes des Anspruches 1 wird diese Aufgabe erfindungsgemäß durch dessen kennzeichnende Merkmale gelöst.

Das erfindungsgemäß die Getriebeverbindung zwischen dem Rotationsantrieb und dem Bewegungsübertragungsglied unterbrechende Anschlußglied kann ein bestimmter Bereich der zusammengefügten Stränge sein, in bevorzugter Ausführung handelt es sich jedoch um ein solches, das für beide Stränge gemeinsam ausgebildet ist und an dem beide offen ausgebildeten Stränge mit ihren dem Rotationsantrieb abgewandten Enden angeschlossen sind. Die Unterbrechung der Gewindeverbindung ist in einfachster Weise durch einen verzahnungsfreien Betrieb an dem Anschlußglied geschaffen, in welches das Antriebsgetriebeteil des Rotationsantriebes leerlaufend eingreift, wenn sich das Anschlußglied in einer entsprechenden Montage-Anlieferungs- bzw. Notfall-Verschiebestellung befindet.

Grundsätzlich wird auch hier für den Normalbetrieb von der Vorstellung eines dauernden Getriebeeingriffs ausgegangen und das Antriebsaggregat mit wie auch immer gestalteten Endschaltern gesteuert. Versagt der Endschalter, der von der Bewegungsstrecke her gesehen in dessen dem Rotationsantrieb zugewandten Endbereich angeordnet ist, so bewegt sich das Bewegungsübertragungsglied und damit das Anschlußglied über diese Endverschiebelage hinaus, bis das Getriebeteil des Rotationsantriebes in den Bereich der Getriebeverbindungs-Unterbrechung gelangt und damit eine selbsttätige Entkupplung zwischen dem Rotationsantrieb und dem Bewegungsübertragungsglied herbeiführt. Betrachtet man die andere Endverschiebestellung des Bewegungsübertragungsgliedes und nimmt ein fehlerhaftes Überfahren des dort vorgesehenen Endschalters an, dann kann auch dort eine geringfügig zu haltende Überfahrstrecke vorgesehen werden, in der die Getriebeverbindung zwischen dem Rotationsantrieb und nunmehr dem anderen Ende des Bewegungsübertragungsgliedes unterbrochen wird, in einfachster Weise dadurch, daß die dem Anschlußglied abgewandten Strangenden über den Eingriffsbereich des Getriebeteils des Rotationsantriebes hinaus verschoben werden. Bei Toren besteht darüber hinaus die Möglichkeit, eine vorgesehene Unfallschutzleiste bei Überfahren des Schließbereiches entsprechend zu betätigen und damit die Notfall-Abschaltung auszulösen.

In besonders bevorzugter Ausführung ist die Getriebeverbindung zwischen dem Rotationsantrieb und dem Bewegungsübertragungsglied durch eine Getriebeschnecke gebildet, die in ein entsprechendes Schnecken-Gegengewinde eingreift. Man erhält eine Gewindeverbindung zwischen dem Gewinde der Getriebeschnecke des Rotationsantriebes und dem Schnecken-Gegengewinde, das in dem Bewegungsübertragungsglied in sich geschlossen umlaufend ausgebildet ist. Dabei wird das Schnecken-Gegengewinde im Zuge der Zusammenführung der beiden Stränge erst als solches gebildet. Um eine möglichst gleiche Ausbildung der Stränge zu ermöglichen, d. h. diese symmetrisch einander zugeordnet ausbilden zu können, ist in besonders bevorzugter Ausführung das Schnecken-Gegengewinde jeweils hälftig in dem im zusammengeführten Zustand einander gegenüberliegenden bzw. mit ihren Zahnausbildungen ineinandergreifenden Seiten der Stränge ausgebildet, derart, daß das Schnecken-Gegengewinde innerhalb der Führung als in axial verlaufender Mittelebene geteilt anzusehen ist. Das Anschlußglied weist im Bereich der Unterbrechung vorzugsweise einen in Verschieberichtung verlaufenden zylindrischen Hohlraum auf, dessen Innenwandung geringfügig größer als die radiale Ausdehnung des Gewindes der Getriebeschnecke ist, so daß sich diese in dem Hohlraum frei drehen kann. Zugleich ist die Getriebeschnecke geschützt und das Wiedereingreifen des Schneckengewindes in das Gegengewinde durch entsprechende Axialversetzung erleichtert.

Bei der Vormontage des Getriebes wird die Verschiebelage des Bewegungs-Übertragungsgliedes derart eingestellt, daß sich die Schnecke des Rotationsantriebes bzw. dessen Getriebeglied ganz allgemein in dem Unterbrechungsbereich befindet, also in diesem gegenüber der Getriebeausbildung des Bewegungsübertragungsgliedes frei drehbar ist. Wird das Getriebe in diesem Zustand am Einsatzort installiert, so führt ein unsachgemäßes oder versehentliches Einschalten des Antrieb-Aggregates nur dazu, daß sich der Rotationsantrieb frei dreht und das Bewegungsübertragungsglied nicht bewegt. Es ist sodann die richtige Drehrichtung des Rotationsantriebes einzustellen bzw. vorzubereiten und dann die getriebliches Verbindung durch entsprechende Verschiebung des Bewegungsübertragungsgliedes in Richtung von dem Rotationsantrieb fort herzustellen.

In besonders bevorzugter Ausführung wird im Zuge einer möglichst weitgehenden Vormontage eine an sich bekannte Speichertrommeleinrichtung beidseits des Trennbereiches der Stränge vorgesehen, derart, daß beide Speichertrommeln je zumindest hinsichtlich ihres Bodens eine Drehlagerung aufweisen, auf dem der eingelagerte Strang in spiralförmigen Verlauf abgelegt ist.

Durch die drehbare Ausbildung des Bodens eines jeden der beiden Trommelspeicher wird die ansonsten bei Speicherung in führungsparallelen Kammern auftretende Reibwiderstand vermieden.

Begnügt man sich mit der drehbaren Lagerung und bewirkt man die Drehung unter Schubbeanspruchung der in die Speicher eingeführten Stränge, so wird man bevorzugt an der Peripherie der Ablagefläche von dieser aufragend eine Seitenwandung an dem Boden ausbilden, an der sich die eingeführten Strangabschnitte abstützen. Je nach räumlicher Ausrichtung der Speichertrommeln in der Betriebslage kann es auch vorteilhaft sein, eine der Auflagefläche gegenüberliegende Abschlußwandung mit dem Boden drehbar auszugestalten.

Im Falle des Antriebes des Speicherbodens durch den eingeführten Strang muß eine Führungsaußenfläche zwischen dem Zusammenführungsbereich der Stränge und der Seitenwandung der Trommel zur Verfügung gestellt werden, die eine möglichst stufenfreie Schubbewegung des Stranges erlaubt. Insbesondere für diesen Fall ist in dem dem Rotor des Antriebsmotors zugewandten Endbereich der Verbindungswelle zwischen dem Rotor und der getriebischen Schnecke ein konusförmiger Wellenabschnitt vorgesehen, der sich von dem von der Schnecke ausgehenden verjüngten Wellendurchmesser zum Rotor hin, insbesondere unter Bildung einer zur Wellenachse hin gekrümmten Mantelfläche, erweitert und an dessen erweiterter Schulter eine ortsfest in dem Basisteil ausgebildete Außenführungswandung anschließt. Für den Fall, daß die Stränge unter Zusammenführen aus den Speichern herausbewegt werden, stehen sie unter einer Zugbelastung, die dazu führt, daß sich die Stränge an der gegenüberliegenden inneren Führungswandung abstützen, die ebenfalls an dem Basisteil ausgebildet ist, und zwar im Zuge von kanalförmigen Ausnehmungen.

In besonders bevorzugter Ausführung der Erfindung wird der Boden unter Federkraft in die Drehrichtung beaufschlagt, in der der Strang dieser Speichertrommel aufgewickelt wird, also zunehmend in seine Speicherlage überführt wird. Damit wird erreicht, daß die Führungsstränge nicht nur bei ihrer Überführung aus dem Speicher heraus unter Bildung eines zunehmend langen Bewegungsübertragungsgliedes an den ihnen zugeordneten inneren Führungseiten entlanggleiten, sondern daß dies auch bei Überführen der sich trennenden Stränge unter Abbau der Länge des Bewegungsübertragungsgliedes in ihre jeweilige Speicherlage hinein der Fall ist. Als Folge davon kann man das Schwergewicht der reibungsarmen Führungsausbildung auf die Führungsinnenwände beschränken.

Die jeweils zugeordnete Feder ist vorzugsweise an der der Ablagefläche gegenüberliegenden Bodenunterseite angeordnet, und zwar insbesondere in Form einer Spiralfeder, die vorzugsweise als Blattfederband ausgebildet ist. Dabei ist die Feder vorzugsweise lang ausgebildet und erstreckt sich im radial äußeren Bereich der Bodenunterseite, damit eine über den Federweg hinweg flache Federcharakteristik entsteht und die für das Spannen der Feder erforderliche Kraft gleichbleibend gering gehalten wird, so daß die für das Spannen der Feder unter Zugbelastung aus der Speicherlage herausgeführten Stränge unter geringer Spannung stehen.

In bevorzugter Ausführung werden die beiden Trommelspeicher beidseits des Zusammenführungsbereichs der Stränge — also je ein Speicher auf je einer der beiden Seiten — derart angeordnet, daß ihre Böden in einer gemeinsamen, in der Betriebslage etwa horizontal verlaufenden Ebene liegen, so daß man einen raumsparenden Aufbau erhält und in der Lage ist, das Basisteil mit Antriebsmotor und vormontierten Strängen nebst Anschlußteil getrennt von der ein- oder mehrteiligen Führungsschiene vorzumontieren und in transporttechnisch günstiger Raumaufteilung auszubilden.

Bevorzugte Ausführungsformen der Erfindung ergeben sich aus den Unteransprüchen im Zusammenhang mit den in der Zeichnung wiedergegebenen Ausführungsbeispielen. Es zeigen :

Figur 1 eine bereichsweise aufgebrochen wiedergegebene Teildarstellung eines ersten Ausführungsbeispieles bei abgenommener Abdeckung ;

Figur 2 eine Stirnseitenansicht einer die Führung bildenden Hohlprofilschiene ;

Figur 3 eine bereichsweise aufgebrochen wiedergegebene Teildarstellung eines zweiten Ausführungsbeispieles bei abgenommener Abdeckung.

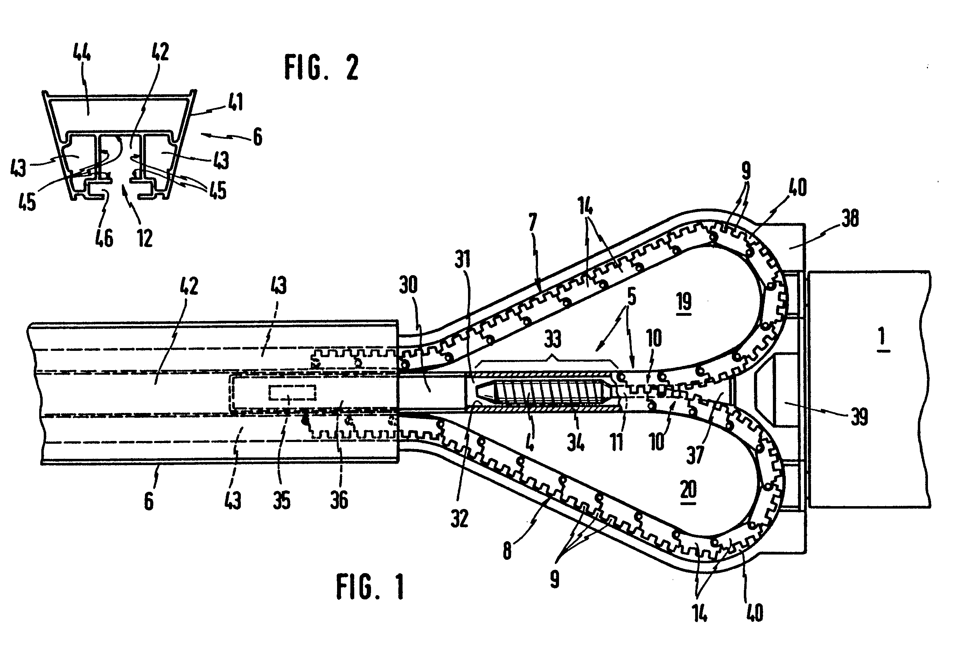

Das Getriebe nach dem Ausführungsbeispiel ist mit einem Antriebsmotor 1 ausgerüstet, an dessen Rotorwelle einstückig anschließend über einen Abtriebswellenbereich 11 eine Schnecke 4 ausgebildet ist. Diese Schnecke 4 greift in Längsrichtung in ein Bewegungsübertragungsglied 5 ein, das in einer in Wellenlängsrichtung verlaufenden Führung 6 hin und her bewegbar geführt ist. Das Bewegungsübertragungsglied 5 wird längenveränderlich zur Verfügung gestellt, in dem zwei Stränge 7 und 8 über eine Verzahnung 9 zusammengeführt bzw. getrennt werden. Die Verzahnung verläuft quer zur Längsrichtung der Stränge und ist in deren Längsrichtung durch ein Schnecken-Gegengewinde unterbrochen, so daß die Verzahnung 9 sich beidseits der Randbereiche zu diesem erstreckt. Die Verzahnung 9 und das Schneckengegengewinde 10 sind an den bei Zusammenführen der Stränge einander zugewandten Strangseiten vorgesehen, derart, daß die Zähne der Verzahnung 9 ineinandergreifen und daß das Schneckengewinde 10 gebildet wird, das jeweils hälftig in den aufeinander zu gerichtet zusammengeführten Seiten der Stränge 7 und 8 ausgebildet ist. Dies zeigt im Schnitt Figur 2 der DE-PS 34 19 477.

Die beiden Stränge 7 und 8 sind außerhalb der Führung 6 mit Hilfe zweier Umlenkführungen 19 und 20 gehalten, mit deren Hilfe die Stränge 7 und 8 nach ihrer Trennung und Querverformung in Speicherkammern 43 der Führung 6 in Parallellage zu dem Bewegungsübertragungsglied überführt werden. Im Bereich ihrer Zusammenführung sind die dem Antriebsmotor 1 abgewandten Enden der Stränge 7 und 8 an ein für beide Stränge gemeinsames Anschlußglied 30 angeschlossen, das somit den Anfang des sich bildenden Bewegungsübertragungsgliedes 5 darstellt und in eine Führungskammer 42 der Führung 6 längsverschiebbar eingreift. Das Anschlußglied 30 ist in seinem an die Enden der Stränge 7 und 8 anschließenden Abschnitt mit einem Hohlraum 31 versehen, der die Form eines sich in Verschieberichtung erstreckenden Hohlzylinders aufweist, dessen Mantelwandung 32 einen größeren Durchmesser aufweist als der Außendurchmesser des Getriebes der Getriebeschnecke 4. Dieser Hohlraum ist in Achsrichtung darüber hinaus länger ausgebildet als die Getriebeschnecke 4 in gleicher Richtung, so daß sich die Schnecke 4 innerhalb des Hohlraumes 31 frei drehen kann, d. h. außer Eingriff mit dem Schnecken-Gegengewinde 10 der Stränge 7 und 8 ist. Innerhalb des Hohlraumes 31 ist somit die Gewindeverbindung zwischen der Schnecke 4 und den Strängen 7 und 8 unterbrochen, der Hohlraum bildet einen Unterbrechungsbereich 33.

Das Anschlußglied 30 ist als beispielsweise aus Kunststoff bestehendes Vierkantteil ausgebildet und weist zur Bildung des Unterbrechungsbereiches 33 im Anschluß an die Stränge 7 und 8 einen rohrförmigen Körper 34 auf, dessen Innenmantelwandung 32 die Hohlraumwandung bildet. Der rohrförmige Körper 34 ist in nicht weiter dargestellter Weise mit den an der Führung anliegenden Wandungen verbunden bzw. einstückig mit diesen ausgeformt, wobei grundsätzlich nur zwei derartige Wandungen vorgesehen werden müssen, während deren Stirnseiten die übrigen Führungsflächen für die Anlage an der Führungswandung 45 der Führungskammer 42 bilden. In Richtung von dem Antriebsmotor 1 aus gesehen schließt sich an dem rohrförmigen Körper 34 ein Arbeitsendbereich 36 des Anschlußgliedes 30 an, das mit einem Anschlußabschnitt 35 versehen ist, an dem in ebenfalls nicht weiter dargestellter Weise ein entlang der Führung 6 verschiebbar geführter Schlitten angeschlossen ist, der seinerseits mit dem zu bewegenden Gegenstand in Verbindung steht, beispielsweise gelenkig mit einem Torblatt verbunden ist.

Die Abschnitte werden im Bereich der Verbindungswelle 11 zwischen der Getriebeschnecke 4 und dem Rotor des Antriebsmotors 1 in den Verzahnungseingriff zusammengeführt bzw. aus diesem getrennt. Um insbesondere im Zuge der Trennung die schubbelastet in die Speicherkammern 43 der Führung 6 gelangenden Stränge gut zu führen, ist der Wellenverbindungsabschnitt 11 in seinem dem Rotor des Antriebsmotors 1 zugewandten Bereich mit einem konusförmigen Wellenabschnitt 37 versehen, der sich von der Schnecken- bzw. Abtriebsseite der Welle 11 her zu dieser koaxial konisch und bevorzugt mit zur Wellenachse verwölbt laufender Mantelfläche zum Antriebsmotor hin erweitert. Der Abschnitt 37 geht dort gestuft oder ungestuft in die Rotorwelle des Antriebsmotors 1 über, die in einem Basisteil 38 und einer dort vorgesehenen Auswölbung 39 eine ihrer Lagerstellen aufweist.

An das Basisteil 38 sind an dessen einander gegenüberliegenden Stirnseiten zum einen der Antriebsmotor 1 und zum anderen die Führung 6 angeschlossen. Entsprechend dem Überführungsweg zwischen dem Zusammenführungsbereich in Höhe der Abtriebswelle 11 und den Speicherkammern 43 für die separierten Stränge 7 und 8, nämlich in einander gegenüberliegenden bogenförmigen Verläufen, sind in dem Basisteil Kanäle 40 ausgebildet, die an das konusförmig vergrößerte Ende des Wellenabschnittes 37 anschließen und durch bogenförmige stirnseitige Wandausbildung übergehend in gradlinige Abschnitte auf die Speicherkammern 43 zu im Endbereich abgebogen die außenseitig liegenden Wandungen der Kanäle 40 bilden, während dessen gegenüberliegende Innenwandungen durch die Umlenkführungen 19 und 20 gebildet sind. In praktischer Ausführung ist in dem Basisteil für jeden der Abschnitt 7 und 8 je ein Kanal 40 eingearbeitet, so daß im Bogeninnenbereich eines jeden Kanals eine Umlenkführung 19 bzw. 20 entsteht, während die gegenüberliegenden Kanalwandungen durch außenseitige Abschnitte des Basisteils gebildet werden.

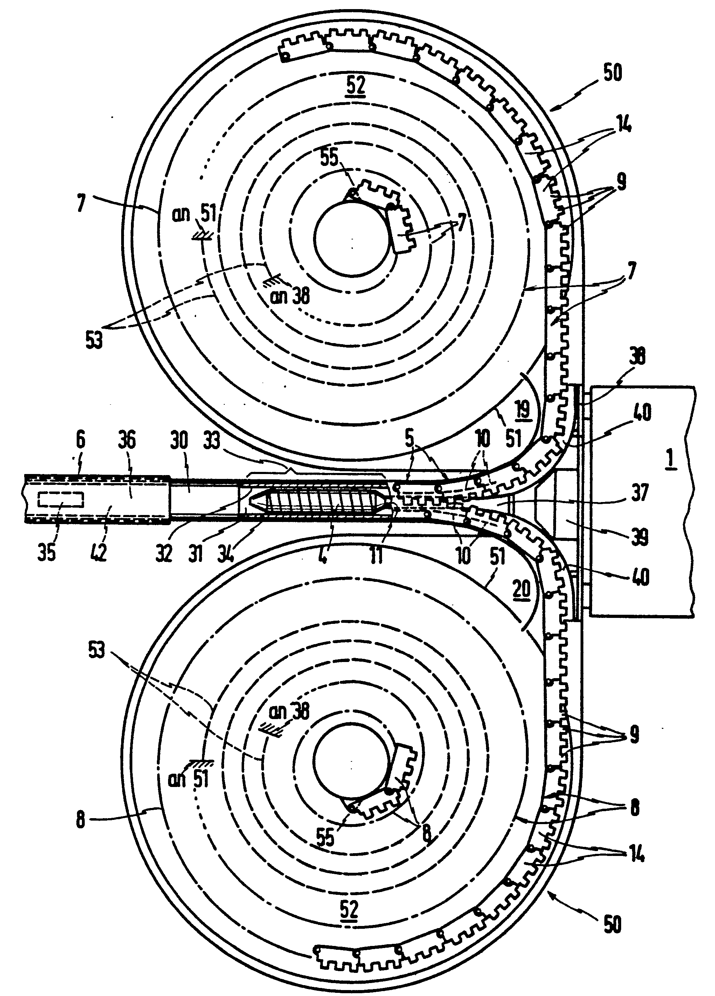

In dem wiedergegebenen Ausführungsbeispiel sind die Stränge jeweils aus einer Vielzahl in Strangrichtung aufeinanderfolgend angeordneter Strangabschnitte 14 gebildet, die untereinander gelenkig verbunden sind und an denen die Verzahnung und die Halbbereiche des Schnecken-Gegengewindes 10 ausgebildet sind. Dies entspricht dem Ausführungsbeispiel gemäß Figur 3 des deutschen Patentes 34 19 477, die Stränge 7 und 8 können aber auch nach den anderen dort wiedergegebenen Ausführungsbeispielen oder auch auf andere Art, beispielsweise in Form von Zahnriemen ausgeführt sein.

Figur 2 zeigt einen Querschnitt bzw. eine Stirnansicht einer die Führung 6 bildenden Hohlprofilschiene 41. Zwischen den Seitenwandungen der Schiene 41 ist eine obere Verbindungskammer 44 ausgebildet, die der Aufnahme von Verbindungstücken dienen kann, mit denen die Schiene 41 an das Basisteil 38 angeschlossen wird oder mit deren Hilfe in Längsrichtung aufeinanderfolgende Abschnitte der Schiene 41 untereinander verbunden werden können. Im Längsmittelbereich der Schiene 41 ist unterhalb der Verbindungskammer 44 die Führungskammer 42 für die Aufnahme des Anschlußgliedes 30 und des bei entsprechendem Einschieben in die Führung 6 auf dieses folgend sich bildenden Bewegungsübertragungsgliedabschnittes aus den zusammengeführten Strängen 7 und 8 ausgebildet. Die Führungskammer 42 ist über einen an ihrer Unterseite ausgebildeten Längsschlitz 12 mit einem Schlittenführungsraum 46 verbunden, in dem ein nicht dargestellter, mit dem Anschlußteil 30 verbundener Schlitten längsverschiebbar geführt ist. Die Führungswandung 45 innenseitig des Führungsraumes 42 ist damit lediglich durch den Längsschlitz 12 unterbrochen. Im übrigen sind unterhalb der Verbindungskammer 44 und beidseits der Führungskammer 42 Speicherkammern 43 angeordnet, die im Querschnitt gesehen ringsum geschlossen sind.

Figur 1 gibt die Verschiebestellung des Anschlußgliedes 30 und damit der Stränge 7 und 8 wieder, in der die Gewindeverbindung 4, 10 durch Eingriff der Schnecke 4 in den Gewindeunterbrechungsbereich 33 des Anschlußgliedes 30 bzw. dessen Hohlraum 31 unterbrochen ist. In dieser Verschiebestellung wird das Getriebe vorzugsweise vormontiert am Einsatzort angeliefert. Aus dieser Verschiebestellung läßt sich der Gewindeeingriff zwischen dem Gewinde der Getriebeschnecke 4 und dem Schnecken-Gegengewinde 10 der Stränge 7 und 8 einfach dadurch herstellen, daß man in den außerhalb des nicht dargestellten Schlittens von unten her zugänglichen Längsschlitz eingreift und somit ohne die nicht dargestellte Abdeckung des Basisteils 38 abnehmen zu müssen von außen her an das Anschlußglied 30 gelangt und dieses in Richtung von dem Antriebsmotor 1 fort verschiebt. Nunmehr dreht sich bei richtiger Drehrichtung des Motorrotors das Gewinde der Getriebeschnecke 4 in das Schnecken-Stränge 7 und 8 und damit das Anschlußglied 30 ausgeübt wird. Bei umgekehrter Drehrichtung der Getriebeschnecke 4 wird das aus den zusammengeführten Strängen 7 und 8 und dem Anschlußglied 30 gebildete Bewegungs-Übertragungsglied in Richtung auf den Motor 1 zunehmend aus der Führung 6 herausgezogen, wodurch sich die Stränge 7 und 8 geführt durch den konusförmigen Wellenabschnitt 37 und die daran anschließenden Außenwände der Kanäle 40 voneinander trennen. Beispielsweise mit Hilfe eines Endschalters wird dafür Sorge getragen, daß bei störungsfreiem Betrieb der Eingriff zwischen der Schnecke 4 und den zusammengeführten Strängen 7 und 8 bei Abschalten in dieser Endlage erhalten bleibt, in Figur 1 also das Anschlußglied 30 sich weiter in die Führung 6 eingeschoben befindet. Figur 1 gibt demnach die Verschiebestellung wieder, die bei fehlerhaftem Überfahren des Endschalters erreicht wird und die selbsttätige Entkopplung zwischen Motor 1 und Bewegungsübertragungsglied 5 bewirkt, und die gezielt bei Auslieferung des vormontierten Getriebes eingestellt wird.

Das Getriebe nach dem zweiten Ausführungsbeispiel, das in Fig. 3 wiedergegeben ist, arbeitet mit einem Antriebsmotor 1, einer Schnecke 4 und einem Bewegungsübertragungsglied 5, einer Führung 6 und zwei in dieser zusammengeführten Strängen 7 und 8, deren Verzahnung 9 in den bei Zusammenführen aufeinander zu gerichteten Seiten der Stränge angeordnet sind und zwischen denen ein Schneckengewinde 10 gebildet wird, wie im Zusammenhang mit dem Ausführungsbeispiel 1 bereits ausführlich dargelegt wurde.

Die beiden Stränge 7 und 8 sind außerhalb der Führung 6 mit Hilfe zweier Umlenkführungen 15 und 20 gehalten, mit deren Hilfe sie nach ihrer Trennung und Verformung in Querrichtung in Speichertrommeln 50 überführt werden, die beidseits des Zusammenführungsbereiches, d. h. des Bereiches der Schnecke 4 und davor, angeordnet sind. Entsprechend dem Überführungsweg zwischen dem Zusammenführungsbereich in Höhe der Abtriebswelle 11 und den Speichertrommeln 50 für die separierten Stränge 7 und 8, nämlich in einander gegenüberliegenden Verläufen, sind in dem Basisteil Kanäle 40 ausgebildet, die an das konusförmig vergrößerte Ende des Wellenabschnittes 37 anschließen und durch bogenförmige stirnseitige Wandausbildungen in den Raum oberhalb der Böden 51 in die Speichertrommeln 50 münden.

Jeder Boden 51 ist als Kreisscheibe ausgeführt, in deren Mitte eine insgesamt mit 56 bezeichnete Drehlagerung praktisch beliebiger Ausgestaltung vorgesehen ist. Die Böden 51 der Speichertrommeln 50 liegen in einer gemeinsamen Ebene, die im Einbauzustand am Betriebsort etwa horizontal gerichtet ist, so daß die Drehachsen etwa vertikal aufstreben. Die dem Betrachter zugewandten Seiten der Böden 51 sind als Ablageflächen 52 ausgebildet, auf der die in den Speicher überführten Längsabschnitte der Stränge 7 bzw. 8 aufliegen. Sobald also der speicherseitige Endbereich der Stränge 7 den zugehörigen Speicherboden erreicht, wird er praktisch bewegungslos zu diesem in Drehrichtung geführt.

Für den Fall, daß die Drehbewegung des Bodens 51, der dann vorzugsweise mit einem seitlich über die Peripherie der Ablagefläche 52 aufstrebend ausgebildeten Rand versehen ist, aufgrund der Schubwirkung der in die Speicherlage überführten Stränge gedreht wird, gleiten die schubbelasteten Stränge an der jeweiligen Außenwandung der Kanäle, zu welchem Zwecke die Welle 11 mit dem konusförmigen Abschnitt 37 versehen ist. Im Zuge der umgekehrten Bewegung aus dem Speicher heraus legen sich die Stränge unter Zugbelastung dagegen an den Führungsinnenwandungen des jeweiligen Kanals 40 an.

Die Zeichnung gibt eine Ausführung wieder, bei der jeder Boden 51 unter der Last einer Feder 53 steht, und zwar derart, daß die Feder 53 den Boden in die Drehrichtung zu überführen sucht, in der der jeweilige Strang um die Drehachse herum in die Speichertrommel 50 aufgenommen wird. Dies hat zur Folge, daß die Stränge 7 bzw. 8 auch bei der Einspeicherbewegung an der Führungsinnenwand des jeweiligen Kanals 40 entlanggleitend gehalten sind. Es herrscht somit in beiden Bewegungsrichtungen der Stränge 7 und 8 immer eine leichte Zugbelastung vor, so daß die Außenwandungen der Kanäle 40 und der konische Wellenabschnitt 37 in erster Linie Vorsorgemaßnahmen darstellen bzw. die Stränge dann führend aufnehmen, wenn diese aufgrund einer Beeinträchtigung der Drehlagerungen der Böden oder eines Federbruches unter Schubbelastung in ihre Speicherstellung gelangen müssen.

Die jedem der Böden 51 zugeordnete Feder 53 befindet sich an der der Ablagefläche 52 gegenüberliegenden Bodenunterseite, also dem Betrachter abgewandt, und ist in der Zeichnung gestrichelt als Spiralfeder angedeutet, die wie dargestellt bevorzugt in einem radial äußeren Bereich verläuft und lang ausgebildet ist, so daß über den Aufwickel-Drehbereich des Bodens hinweg eine flache Kraft-Weg-Charakteristik erreicht wird, wobei eine nur geringe Federkraft auf den jeweiligen Boden einwirkt, so daß die Zugspannung auf die Stränge und damit deren Anlagedruck an die Führungsflächen gering bleibt.

Ersichtlich ist es nicht notwendig, in diesem Falle die drehbar gelagerten Böden 51 mit einem Rand für die Abstützung der Abschnitte zu versehen. Die Spiralfedern, die vorzugsweise als Blattfederbänder ausgebildet sind, können mit ihrem inneren Spiralende an dem Basisteil 38 und ihrem äußeren Spiralende an dem Boden festgelegt werden oder umgekehrt.

Die Führung 6 ist vorzugsweise als Profilschiene ausgebildet, die den Führungsraum 42 aufweist, der in nicht dargestellter Weise an seiner Unterfläche mit einem Längsschlitz versehen ist, durch welchen der Anschlußabschnitt 35 des Anschlußgliedes 30 auf nicht dargestellte Weise mit dem Schlitten oder direkt mit dem zu bewegenden Bauteil, insbesondere einem Torblatt, beispielsweise einem über Kopf bewegbaren Torblatt eines Garagentores, in Verbindung steht.

## Patentansprüche

1. Getriebe zur Überführung einer rotatorischen in eine translatorische Bewegung, vorzugsweise angeschlossen an ein elektrisches Antriebsmotor-Aggregat (1), mit einem Rotationsantrieb und einem translatorisch bewegbar gehaltenen Bewegungs-Übertragungsglied (5), das in Bewegungsrichtung gesehen in zwei Stränge (7, 8) längsgeteilt ausgebildet ist, die einen Endes außerhalb einer Führung (6) quer zur Führungsrichtung verformbar jeweils für sich getrennt geführt sind, die anderen Endes in der Führung gegen ein seitliches Entfernen voneinander zusammengeführt gehalten sind, die im Bereich ihrer Zusammenführung über eine Getriebeverbindung (4, 10) an den Rotationsantrieb angeschlossen sind, die an ihren im Bereich der Führung einander gegenüberliegenden Seiten über eine Verzahnung (9) ineinandergreifen und die in ihrem dem Rotationsantrieb abgewandten Bereich in der Führung ein Anschlußglied (30) aufweisen, insbesondere in offener Ausbildung mit ihren Enden an das für beide Stränge gemeinsame Anschlußglied angekoppelt sind, dadurch gekennzeichnet, daß die Getriebeverbindung (4, 10) im Bereich des Anschlußgliedes (30) unterbrochen (33) ist.

2. Getriebe nach Anspruch 1, bei dem die Stränge (7, 8) des Bewegungs-Übertragungsgliedes (5) im Bereich ihrer Zusammenführung an den Rotationsantrieb über eine Getriebeschnecke (4) angeschlossen sind, die sich in Längsrichtung der Führung (6) erstreckt und in ein Schnecken-Gegengewinde (10) eingreift, das an den im Bereich der Führung einander gegenüberliegenden Seiten der Stränge neben der Verzahnung (9), deren etwa senkrecht zur Führungslängsrichtung verlaufende Zähne vorzugsweise unterbrechend — insbesondere unter Teilung der Gewindewendel in axial verlaufender Mittelebene je hälftig — ausgebildet ist, dadurch gekennzeichnet, daß an das Anschlußglied (30) beide Stränge (7, 8) angeschlossen sind, daß innerhalb des Anschlußgliedes (30) ein in Richtung der Führung (6) verlaufender Hohlraum (31) ausgebildet ist, der an das Schnecken-Gegengewinde (10) mit radial vergrößerter Wandung (32) anschließend ausgebildet ist und dessen axiale Länge größer ist als die axiale Länge des Gewindes der Getriebeschnecke (4).

3. Getriebe nach Anspruch 2, dadurch gekennzeichnet, daß in dem Anschlußglied (30) ein koaxial zum Schnecken-Gegengewinde (10) und damit zu der Getriebeschnecke (4) verlaufender zylindrischer Hohlraum (31) ausgebildet ist, dessen Innenmantelfläche (32) die radial äußere Berandung des Gewindes der Getriebeschnecke (4) im Unterbrechungsbereich (33) spielbehaftet umgreift.

4. Getriebe nach Anspruch 3, dadurch gekennzeichnet, daß das Anschlußglied (30) in jeder Verschiebelage des Bewegungs-Übertragungsgliedes (5) innerhalb der Führung (6) verbleibt und in Längsrichtung der Führung (6) an deren Führungswandungen (45) angepaßte Außenwandungen aufweist, an denen ein die Innenmantelfläche (32) aufweisender rohrförmiger Körper (34) gehalten ist.

5. Getriebe nach einem der Ansprüche 1 bis 4, dadurch gekennzeichnet, daß das Anschlußglied (30) mit einem Anschlußabschnitt (35) auf einen in Längsrichtung der Führung (6) in dieser ausgebildeten Längsschlitz (12) ausgerichtet ausgebildet ist.

6. Getriebe nach einem der Ansprüche 1 bis 5, dadurch gekennzeichnet, daß der Anschlußabschnitt (35) — insbesondere in Gestalt einer Gelenkbohrung — in dem von dem Rotationsantrieb abgewandten Endbereich (36) des Anschlußgliedes (30) angeordnet ist, zwischen dem und dem antriebsseitigen Ende des Anschlußgliedes (30) die Unterbrechung (33) der Getriebeverbindung (4, 10) ausgebildet ist.

7. Getriebe nach einem der Ansprüche 1 bis 6, dadurch gekennzeichnet, daß die gemeinsame Welle (11) zwischen dem Antriebsmotoraggregat (1) und der Getriebeschnecke (4) in diesem Übergang einen konischen Wellenabschnitt (37) — insbesondere mit in Konusrichtung gesehen nach innen verwölbt ausgebildeter Konusfläche — aufweist, dessen Konusfläche als Führungsausbildung für die sich teilenden Stränge (7, 8) ausgebildet ist.

8. Getriebe nach einem der Ansprüche 1 bis 7, dadurch gekennzeichnet, daß die Führung (6) als Mehrkammer-Hohlprofilschiene (41) ausgebildet ist.

9. Getriebe nach Anspruch 8, dadurch gekennzeichnet, daß beidseits einer — ggfs. mit einem Längsschlitz (12) unterbrochenen — Führungskammer (42) für die Aufnahme des Anschlußgliedes (30) und des jeweils eingeschobenen Abschnittes des Bewegungs-Übertragungsgliedes (5) aus den zusammengeführten Strängen (7, 8) zwei Speicherkammern (43) für je einen der getrennten Stränge (7, 8) ausgebildet sind.

10. Getriebe nach Anspruch 8 oder 9, dadurch gekennzeichnet, daß oberhalb der Führungskammer (42) und/oder der Speicherkammern (43) eine Verbindungskammer (44) für die Aufnahme von Verbindungsstücken zum Anschluß an das Antriebsmotoraggregat (1, 38) und/oder für den Zusammenhalt von Längsabschnitten der entsprechend unterteilt ausgebildeten Hohlprofilschiene (41) ausgebildet ist.

11. Getriebe nach einem der Ansprüche 1 bis 10, bei dem die außerhalb der Führung getrennt geführten Stränge (7, 8) je in eine seitlich des Trennbereichs angeordnete Speichertrommel (50) einlagerbar sind, dadurch gekennzeichnet, daß beide Speichertrommeln (50) je zumindest hinsichtlich ihres Bodens eine Drehlagerung aufweisen, auf dem der eingelagerte Strang (7) bzw. (8) in spiraligem Verlauf abgelegt ist.

12. Getriebe nach Anspruch 11, dadurch gekennzeichnet, daß an der der Ablagefläche (52) des Bodens (51) entgegengesetzten Bodenunterseite eine den Boden (51) in Aufwickelrichtung des Stranges (7) bzw. (8) beaufschlagende Feder (53) angeordnet ist.

13. Getriebe nach Anspruch 11 oder 12, dadurch gekennzeichnet, daß das in die Speichertrommel (50) mündende Ende (55) des Stranges (7) bzw. (8) an dem Boden (51) im Mittelbereich der Ablagefläche (52) befestigt ist.

14. Getriebe nach einem der Ansprüche 11 bis 13, dadurch gekennzeichnet, daß die drehbaren Böden (51) der beidseits des Zusammenführungsbereiches angeordneten Speichertrommeln (50) in einer gemeinsamen, im Betriebszustand etwa horizontalen Ebene verlaufen.

15. Getriebe nach einem der Ansprüche 12 bis 14, dadurch gekennzeichnet, daß die Feder (53) an der Bodenunterseite spiralig verlaufend angeordnet ist.

16. Getriebe nach Anspruch 15, dadurch gekennzeichnet, daß die Feder als flaches Band ausgebildet ist.

17. Getriebe nach Anspruch 15 oder 16, dadurch gekennzeichnet, daß das spiralaußenseitige Ende der Feder (53) an dem Boden und das spiralinnenseitige Ende an einem Basisteil (38) festgelegt ist.

## Claims

1. Gear for converting a rotary into a translatory movement, preferably connected to an electric drive motor unit (1), having a rotary drive and a motion transmission member (5) which is held so as to be movable in translation, and which is longitudinally divided into two strips (7, 8) viewed in the direction of travel, these strips at one end outside a guide (6) being guided separately so as to be deformable transversely to the direction of the guide and at the other end are held together in the guide to prevent them from moving laterally apart, said strips being connected to the rotary drive in the region of their convergence via a gear connection (4, 10) and interlocking with one another in the region of the guide by means of teeth (9) on their opposed sides and said strips having in their region remote from the rotary drive a connecting member (30) in the guide, and especially in the open configuration are coupled by their ends to the connecting member which is common to both strips, characterised in that the gear connection (4, 10) is interrupted (33) in the region of the connecting member (30).

2. Gear according to claim 1, wherein the strips (7, 8) of the motion transmission member (5) are connected, in the region of their convergence, to the rotary drive via a worm gear (4) which extends in the longitudinal direction of the guide (6) and engages in a worm counter-thread (10) which is formed, on the opposed sides of the strips in the region of the guide, alongside the teeth (9), preferably interrupting those teeth which extend substantially perpendicular to the longitudinal direction of guiding — more particularly by dividing the helical thread in half in the axially extending central plane, characterised in that both strips (7, 8) are connected to the connecting member (30), that inside the connecting member (30) a cavity (31) extending in the direction of the guide (6) is formed, said cavity being formed adjacent the worm counter-thread (10) with a radially enlarged wall (32), the axial length thereof being greater than the axial length of the thread of the worm gear (4).

3. Gear according to claim 2, characterised in that in the connecting member (30) a cylindrical cavity (31) is provided extending coaxially with the worm counter-thread (10) and hence with the worm gear (4), the internal surface (32) of said cavity surrounding the radially outer edge of the thread of the worm gear (4) in the interrupted region (33) with some play.

4. Gear according to claim 3, characterised in that the connecting member (30) remains inside the guide (6) in every position of displacement of the motion transmission member (5) and in the longitudinal direction of the guide (6) has outer walls adapted to the guide walls (45) thereof, on which is supported a tubular body (34) which has the internal surface area (32).

5. Gear according to one of claims 1 to 4, characterised in that the connecting member (30) is constructed with a connecting portion (35) aligned with a longitudinal slot (12) formed in the guide (6) and in the longitudinal direction thereof.

6. Gear according to one of claims 1 to 5, characterised in that the connecting portion (35) — more particularly in the form of a hinge opening — is arranged in the end portion (36) of the connecting member (30) remote from the rotary drive, the interruption (33) in the gear connection (4, 10) being provided between said end portion (36) and the drive end of the connecting member (30).

7. Gear according to one of claims 1 to 6, characterised in that the common shaft (11) between the drive motor unit (1) and the worm gear (4) comprises, in this transitional area, a conical shaft portion (37) — more particularly having a cone surface which is inwardly convex, viewed in the direction of the cone — the cone surface being constructed as a guide for the dividing strips (7, 8).

8. Gear according to one of claims 1 to 7, characterised in that the guide (6) is constructed as a multichamber hollow profile rail (41).

9. Gear according to claim 8, characterised in that two storage chambers (43), one for each of the separated strips (7, 8), are formed on both sides of a guide chamber (42) — optionally interrupted by a longitudinal slot (12) — for receiving the connecting member (30) and the pushed-in portion of the motion transmitting member (5) consisting of the converged strips (7, 8).

10. Gear according to claim 8 or 9, characterised in that, above the guide chamber (42) and/or the storage chambers (43), there is a connecting chamber (44) for receiving connecting members for attachment to the drive motor unit (1, 38) and/or for holding together longitudinal portions of the correspondingly subdivided hollow profile rail (41).

11. Gear according to one of claims 1 to 10, in which the strips (7, 8) guided separately outside the guide can each be stored in a storage drum (50) disposed to the side of the separating area, characterised in that both storage drums (50) have, at least in respect of each base thereof, a rotary mounting on which the stored strips (7) or (8) is placed in a spiral configuration.

12. Gear according to claim 11, characterised in that on the underside of the base opposite the deposite surface (52) of the base (51) there is a spring (53) which acts on the base (51) in the direction of winding of the strip (7) or (8).

13. Gear according to claim 11 or 12, characterised in that the end (55) of the strip (7) or (8) entering the storage drum (50) is secured to the base (51) in the central part of the deposite surface (52).

14. Gear according to one of claims 11 to 13, characterised in that the rotatable bases (51) of the storage drums (50) arranged on both sides of the area of convergence extend in a common plane which is substantially horizontal in the operational state.

15. Gear according to one of claims 12 to 14, characterised in that the spring (53) is arranged to extend helically on the underside of the base.

16. Gear according to claim 15, characterised in that the spring is constructed as a flat strip.

17. Gear according to claim 15 or 16, characterised in that the end of the spring (53) which is on the outside of the helix is fixed to the base and the end which is on the inside of the helix is fixed to a structural part (38).

## Revendications

1. Transmission pour convertir un mouvement rotatif en mouvement linéaire, de préférence raccordée à un groupe moteur d'entraînement (1) électrique, avec un entraînement en rotation et un organe de transmission de mouvement (5) maintenu mobile en translation qui, vu dans le sens du déplacement, est réalisé subdivisé longitudinalement en deux tronçons (7, 8), guidés à l'une des extrémités chaque fois séparément à l'extérieur d'un guidage (6), de manière déformable transversalement au sens de guidage, les autres extrémités étant réciproquement maintenues dans le guidage (6), empêchant tout enlèvement latéral, raccordées à l'entraînement à rotation au voisinage de leur guidage commun, par une liaison de transmission (4, 10), venant en prise les unes dans les autres par une denture (9), sur la face située au voisinage du guidage (6), et présentant un organe de raccordement (30) dans leur zone opposée à l'entraînement en rotation (1) et sont en particulier réalisées ouverts, avec leurs extrémités accouplées à l'organe de raccordement commun aux deux tronçons, caractérisée en ce que la liaison de transmission (4, 10) est interrompue dans la zone de l'organe de raccordement (30).

2. Transmission selon la revendication 1, pour laquelle les tronçons (7, 8) de l'organe de transmission de mouvement (5) sont raccordés dans la zone de leur guidage commun par une vis de transmission (4) s'étendant dans le sens longitudinal du guidage (6) et venant en prise dans un contre-filetage de vis (10) qui est réalisé sur les côtés des tronçons mutuellement opposés dans la zone du guidage, à côté de la denture (9) dont les dents se développant approximativement perpendiculairement au sens longitudinal du guidage sont de préférence réalisées en s'interrompant, en particulier en divisant l'hélice de filet chaque fois en moitiés dans le plan central se développant axialement, caractérisée en ce que les deux tronçons (7, 8) sont raccordés à l'organe de raccordement (30), en ce qu'un espace creux (31) est réalisé, se développant en direction du guidage (6) à l'intérieur de l'organe de raccordement (30), se raccordant avec une paroi (32) agrandie radialement au contre-filetage de vis (10) et dont la longueur axiale est plus grande que la longueur axiale du filetage de la vis de transmission (4).

3. Transmission selon la revendication 2, caractérisée en ce qu'un espace creux (31) cylindrique est réalisé dans l'organe de raccordement (30), se développant coaxialement par rapport au contre-filetage de vis (10) et ainsi à la vis de transmission (4), espace (31) dont la surface d'enveloppe intérieure (32) entoure avec un jeu la bordure radiale extérieure du filetage de la vis de transmission (4) dans la zone d'interruption.

4. Transmission selon la revendication 3, caractérisée en ce que l'organe de raccordement (30) demeure à l'intérieur du guidage (6) dans chaque position de déplacement de l'organe de transmission de mouvement (5) et présente en direction longitudinale du guidage (6) des parois extérieures adaptées à leurs parois de guidage (45), sur lesquelles est maintenu un corps (34) de forme tubulaire présentant la surface d'enveloppe intérieure (32).

5. Transmission selon l'une des revendications 1 à 4, caractérisée en ce que l'organe de raccordement (30) avec une partie de raccordement (35) est réalisé aligné par rapport à une fente longitudinale (12) réalisée en direction longitudinale du guidage (6) et dans celui-ci.

6. Transmission selon l'une des revendications 1 à 5, caractérisée en ce que la partie de raccordement (35), en particulier sous forme d'un alésage d'articulation, est disposée dans la zone d'extrémité (36) de l'organe de raccordement (30) opposée à l'entraînement en rotation, entre laquelle l'extrémité côté entraînement de l'organe de raccordement (30) est réalisée l'interruption (33) de la liaison de transmission (4, 10).

7. Transmission selon l'une des revendications 1 à 6, caractérisée en ce que l'arbre commun (11) présente, entre le groupe moteur d'entraînement (1) et la vis de transmission (4), dans cette transition, une partie d'arbre conique (37), en particulier avec une surface conique réalisée avec une courbure vers l'intérieur dans le sens du cône, dont la surface de cône est réalisée sous forme de guidage pour les tronçons (7, 8) se séparant.

8. Transmission selon l'une des revendications 1 à 7, caractérisée en ce que le guidage (6) est réalisé sous forme de glissière profilée creuse à plusieurs chambres (41).

9. Transmission selon la revendication 8, caractérisée en ce que les deux côtés d'une chambre de guidage (42) — interrompue le cas échéant par une fente longitudinale (12) — pour recevoir l'organe de raccordement (30) et la partie chaque fois introduite de l'organe de transmission de mouvement (5) qui provient des tronçons (7, 8) assemblés, deux chambres de réserve (43) sont prévues, chacune pour l'un des deux tronçons (7, 8).

10. Transmission selon la revendication 8 ou 9, caractérisée en ce qu'une chambre de liaison (4) est réalisée au-dessus de la chambre de guidage (42) et/ou des chambres de réserve (43), pour loger des pièces de liaison pour le raccordement au groupe de moteur d'entraînement (1, 38) et/ou pour le maintien assemblé de parties longitudinales des glissières profilées creuses (41) subdivisées en conséquence.

11. Transmission selon l'une des revendications 1 à 10, dans laquelle les tronçons (7, 8) guidés séparément à l'extérieur du guidage sont chacun introductibles dans un tambour de stockage (50) disposé sur le côté de la zone de séparation, caractérisée en ce que les deux tambours de stockage (50) présentent, au moins pour ce qui concerne leur fond, chacun un palier tournant sur lequel le tronçon introduit (7 ou 8) est déposé en se développant en spirale.

12. Transmission selon la revendication 11, caractérisée en ce qu'un ressort (53) sollicitant le fond dans le sens d'enroulement du tronçon (7 ou 8) est disposé sur le côté inférieur opposé à la surface de dépôt (52) du fond (51).

13. Transmission selon la revendication 11 ou 12, caractérisée en ce que l'extrémité (55) du tronçon (7 ou 8) débouchant dans le tambour de stockage (50) est fixée sur le fond (51), dans la zone centrale de la surface de dépôt (52).

14. Transmission selon l'une des revendications 11 à 13, caractérisée en ce que les fonds tournants (51) des deux tambours de stockage (50) disposés des deux côtés de la zone de guidage commun se développent dans un plan commun, approximativement horizontal à l'état de fonctionnement.

15. Transmission selon l'une des revendications 12 à 14, caractérisée en ce que le ressort (53) est disposé en se développant en spirale sur le côté inférieur du fond.

16. Transmission selon la revendication 15, caractérisée en ce que le ressort est réalisé sous forme de bande plate.

17. Transmission selon la revendication 15 ou 16, caractérisée en ce que l'extrémité située côté extérieur de la spirale du ressort (53) est fixée sur le fond et que l'extrémité située côté intérieur de la spirale est fixée sur une partie de base (38).

FIG. 1

FIG. 2